# EUROPÄISCHE PATENTANMELDUNG

(11) **EP 0 976 484 A2**
(43) Veröffentlichungstag der Anmeldung: **02.02.2000**
(21) Anmeldenummer: 99112930.5
(22) Anmeldetag: 05.07.1999
(51) Int. Cl.: B23D 37/00

(54) **Verfahren zur Drehbearbeitung von Rotationsflächen an Werkstücken**

(30) Priorität: 24.07.1998 DE 19833363
(71) Anmelder: HEGENSCHEIDT-MFD GmbH, D-41812 Erkelenz (DE)
(72) Erfinder: Lowis, Clemens, Dipl.-Ing., 41812 Erkelenz (DE)

(57) **Zusammenfassung**

Bei einem Verfahren zur Drehbearbeitung von Rotationsflächen an Werkstücken (3), vorzugsweise an Kurbelwellen, bei dem das Werkstück (3) während der Drehbearbeitung rotiert und mit einem scheibenförmigen Werkzeug (10), das am Umfang mit versetzt angeordneten Schrupp- (53, 54, 55, 56, 57, 58) und Schlicht-Schneideinsätzen (59, 60, 64, 65) versehen ist, bearbeitet wird, wobei zur Schlichtbearbeitung einer jeden zylindrischen Fläche (63) des Werkstückes (3) mehrere Schlicht-Schneideinsätze (64, 65) eingesetzt werden, die zeitlich nacheinander in in Achsrichtung des Werkstückes (3) aufgeteilten Bereichen (69, 73) Material vom Werkstück (3) abgetragen, wird eine hohe Bearbeitungsgenauigkeit dadurch erreicht, daß zur Schlichtbearbeitung einer jeden zylindrischen Fläche (63) des Werkstückes (3) von ihren beiden Flächenenden (70, 72) aus ein Längsschäldrehen durchgeführt wird.

Ein scheibenförmiges Werkzeug (10) zur Durchführung des Verfahrens, das am Umfang mit versetzt angeordneten Schrupp- (53, 54, 55, 56, 57, 58) und Schlicht-Schneideinsätzen (59, 60, 64, 65) versehen ist, weist zur Schlichtbearbeitung einer jeden zylindrischen Fläche (63) des Werkstückes (3) mindestens einen linken (64) und mindestens einen rechten Schlicht-Schneideinsatz (65) mit einer zum Längsschäldrehen ausgelegten Schneidengeometrie auf.

## Beschreibung

Die Erfindung bezieht sich auf ein Verfahren zur Drehbearbeitung von Rotationsflächen an Werkstücken, vorzugsweise an Kurbelwellen, bei dem das Werkstück während der Drehbearbeitung rotiert und mit einem scheibenförmigen Werkzeug, das am Umfang mit versetzt angeordneten Schrupp- und Schlicht-Schneideinsätzen versehen ist, bearbeitet wird, wobei zur Schlichtbearbeitung einer jeden zylindrischen Fläche des Werkstückes mehrere Schlicht-Schneideinsätze eingesetzt werden, die zeitlich nacheinander in in Achsrichtung des Werkstückes aufgeteilten Bereichen Material vom Werkstück abtragen, und scheibenförmiges Werkzeug zur Durchführung des Verfahrens.

Ein Verfahren der vorgenannten Art und ein Werkzeug zur Durchführung eines solchen Verfahrens sind durch die deutsche Patentschrift DE 41 19 162 C1 bekannt.

Bei diesem bekannten Verfahren wird die Schlichtbearbeitung einer jeden zylindrischen Fläche eines Werkstückes durch ein in Achsrichtung des Werkstückes aufgeteiltes Einstechdrehen durchgeführt.

Dem aufgeteilten Einstechdrehen haftet der Nachteil an, daß Fluchtabweichungen der Einstechschneiden zu der Drehachse der Drehmaschine sich ungünstig auf die Bearbeitungsgenauigkeit auswirken.

Der Erfindung liegt die Aufgabe zugrunde, das Verfahren der eingangs genannten Art und das gattungsgemäße scheibenförmige Werkzeug so auszubilden, daß bei der Schlichtbearbeitung einer jeden zylindrischen Fläche eines Werkstückes eine hohe Bearbeitungsgenauigkeit erreicht wird.

Erfindungsgemäß wird diese Aufgabe bei dem Verfahren dadurch gelöst, daß zur Schlichtbearbeitung einer jeden zylindrischen Fläche des Werkstückes von ihren beiden Flächenenden aus ein Längsschäldrehen durchgeführt wird.

Ein scheibenförmiges Werkzeug zur Durchführung des Verfahrens, das am Umfang mit versetzt angeordneten Schrupp- und Schlicht-Schneideinsätzen versehen ist, weist zur Schlichtbearbeitung einer jeden zylindrischen Fläche des Werkstückes mindestens einen linken und mindestens einen rechten Schlicht-Schneideinsatz mit einer zum Längsschäldrehen ausgelegten Schneidengeometrie auf.

Jeder Schrupp- und Schlicht-Schneideinsatz ist Bestandteil einer Werkzeugeinheit.

Die Schlicht-Schneideinsätze zum Längsschäldrehen haben den Vorteil, daß sie auch zur Schlichtbearbeitung von konkaven und konvexen Flächen eines Werkstückes eingesetzt werden können.

Im folgenden wird die Erfindung anhand einer Zeichnung, in der ein Ausführungsbeispiel schematisch dargestellt ist, näher beschrieben.

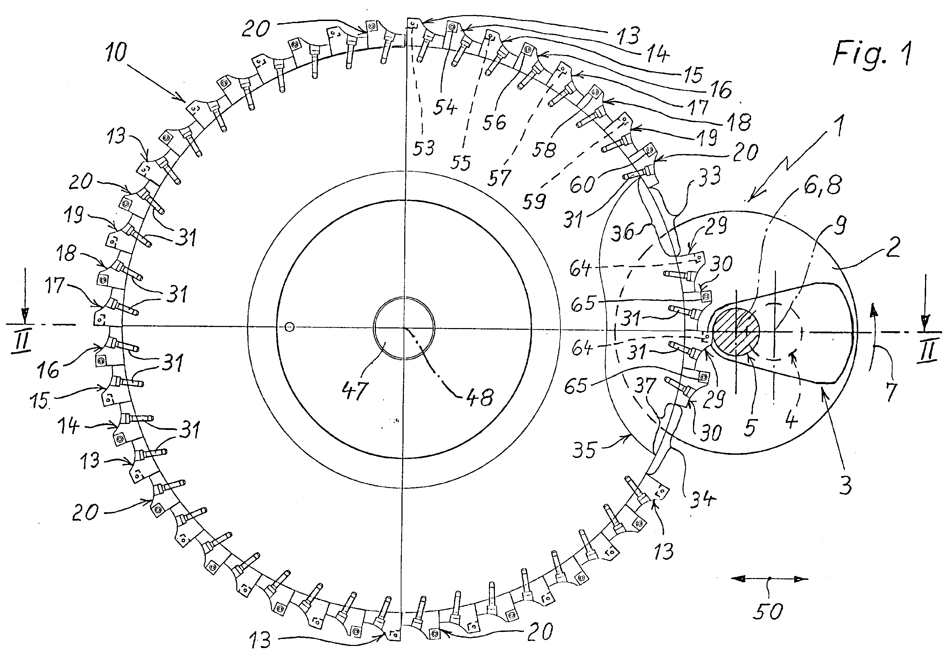

Es zeigt
- Fig. 1: eine Teilansicht einer Drehmaschine mit einem scheibenförmigen Werkzeug und einen Schnitt durch einen Pleuellagerzapfen einer von der Drehmaschine aufgenommenen Kurbelwelle, wobei ein Schlicht-Schneideinsatz einer Werkzeugeinheit in einer Arbeitsstellung ist,

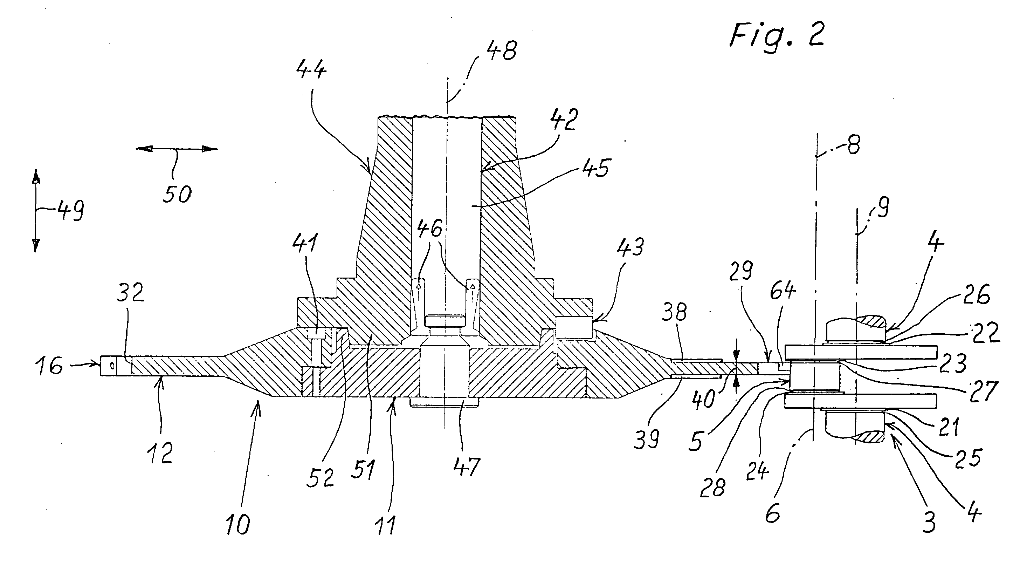

- Fig. 2: einen Teilschnitt entsprechend der Linie II - II in Fig. 1,
- Fig. 3: einen Ausschnitt des Pleuellagerzapfens in fertiger Kontur mit dem Schlicht-Schneideinsatz der Werkzeugeinheit gemäß Fig. 2 zu Beginn des Längsschäldrehens in vergrößertem Maßstab mit einem Schnitt durch die Schlichtbearbeitungszugabe,
- Fig. 4: den Ausschnitt des Pleuellagerzapfens in fertiger Kontur gemäß Fig. 3 mit dem Schlicht-Schneideinsatz der Werkzeugeinheit nach dem Längsschäldrehen des rechten Bereichs der zylindrischen Fläche des Pleuellagerzapfens in vergrößertem Maßstab mit einem Schnitt durch die restliche Schlichtbearbeitungszugabe.

Eine Drehmaschine 1, die nur teilweise dargestellt ist, hat zwischen zwei Spannfuttern 2 eine Kurbelwelle 3 mit mehreren Haupt- (4) und Pleuellagerzapfen 5 als Werkstück aufgenommen.

Die Spannfutter 2, die von einem Hauptantrieb (nicht dargestellt) angetrieben werden, bewirken eine Drehbewegung der Kurbelwelle 3 um die Achse 6 eines Pleuellagerzapfens 5 in Richtung des Pfeiles 7.

Die Achse 6 des Pleuellagerzapfens 5 liegt somit in der Drehachse 8 der Drehmaschine 1.

Bei der Drehbearbeitung eines jeden Hauptlagerzapfens 4 liegt die Kurbelwellenachse 9 in der Drehachse 8 der Drehmaschine 1.

Für die Drehbearbeitung von Kurbelwellen 3 ist ein scheibenförmiges Werkzeug 10 vorgesehen, das aus einem Zentrierkörper 11, einem Tragkörper 12, fünfmal sechs Werkzeugeinheiten 13, 14, 15, 16, 17, 18 zum Schruppen der Haupt- (4) und Pleuellagerzapfen 5, fünfmal zwei Werkzeugeinheiten 19, 20 zum Schlichten der Wangenvorsprünge 21, 22, 23, 24 und der Freistiche 25, 26, 27, 28 an den Haupt- (4) und Pleuellagerzapfen 5 und zweimal zwei Werkzeugeinheiten 29, 30 zum Schlichten der Haupt- (4) und Pleuellagerzapfen 5 zwischen den Freistichen 25, 26, 27, 28 besteht.

Alle Werkzeugeinheiten 13 bis 20, 29, 30 sind mittels je einer Schraube 31 auf die Mantelfläche 32 des Tragkörpers 12 aufgespannt.

Die Werkzeugeinheiten 13 bis 20 nehmen auf der Mantelfläche 32 des Tragkörpers 12 einen Zentriwinkel von 5 x (6 + 2) x 7,5° = 300°, die Werkzeugeinheiten 29, 30 einen Zentriwinkel von 2 x 2 x 7,5° = 30° ein.

Die Anordnung der Werkzeugeinheiten 13 bis 20, 29, 30 auf der Mantelfläche 32 ist so gewählt, daß sich zwei gleiche Lücken 33, 34 mit einem Zentriwinkel von je 15° ergeben.

Der Tragkörper 12 ist in einem Abschnitt 35, der die Werkzeugeinheiten 29, 30 und ihre angrenzenden Bereiche 36, 37 erfaßt, mit zwei seitlichen Ausnehmungen 38, 39 ausgeführt.

Die seitliche Tiefe der Ausnehmungen 38, 39 ergibt sich aus der Breite 40 der Werkzeugeinheiten 29, 30.

Bei der Form der Ausnehmungen 38, 39 ist die Umlaufbewegung der Kurbelwelle 3 berücksichtigt.

Der Zentrierkörper 11 und der Tragkörper 12 sind mittels einer Vielzahl von Schrauben 41 miteinander fest verbunden.

Eine Spannvorrichtung 42 und zwei um 120° versetzte Nut-Feder-Anordnungen 43 stellen eine feste Verbindung zwischen dem Werkzeug 10 und einer Werkzeugspindel 44 her.

Zu der Spannvorrichtung 42 gehören ein Spannzylinder (nicht dargestellt), eine in der Werkzeugspindel 44 axial verschiebbar angeordnete Spannstange 45 mit Spannklauen 46 und ein von dem Zentrierkörper 11 aufgenommener Spannbolzen 47.

Die Werkzeugspindel 44 hat eine Schwenkachse 48, um die sie schwenkbar ist.

Angetrieben wird die Werkzeugspindel 44 von einem Schwenkantrieb (nicht dargestelllt).

Die Werkzeugspindel 44 und ihr Schwenkantrieb sind in einem in Längs- (Doppelpfeil 49) und Planvorschubrichtung (Doppelpfeil 50) verschiebbaren Support (nicht dargestellt) angeordnet.

Der Support gewährleistet stets ein Fluchten der Schwenkachse 48 mit der Drehachse 8 der Drehmaschine 1.

Die Werkzeugspindel 44 ist vorn mit einem kegeligen Absatz 51 ausgebildet, der der Zentrierung des Werkzeuges 10 dient. Der Zentrierkörper 11 hat für diesen Zweck einen Ringansatz 52 mit einer inneren Kegelfläche.

Für die Schrupp- und Schlichtbearbeitung der Haupt- (4) und Pleuellagerzapfen 5 einer Kurbelwelle 3 sind die Werkzeugeinheiten 13 bis 20, 29, 30 nur je einmal erforderlich.

Die übrigen Werkzeugeinheiten, nämlich viermal acht Werkzeugeinheiten 13 bis 20 und einmal zwei Werkzeugeinheiten 29, 30, sind als Reserve zur Erhöhung der Arbeitsdauer des Werkzeuges 10 aufzufassen.

Das Ausführungsbeispiel ist darauf abgestellt, daß sechs Werkzeugeinheiten 13 bis 18, die je einen Schrupp-Schneideinsatz 53, 54, 55, 56, 57, 58 enthalten, nacheinander die Schruppbearbeitung eines Pleuellagerzapfens 5 durchführen.

Anschließend werden die Wangenvorsprünge 23, 24 und die Freistiche 27, 28 mit zwei Werkzeugeinheiten 19, 20, die je einen Schlicht-Schneideinsatz 59, 60 enthalten, geschlichtet.

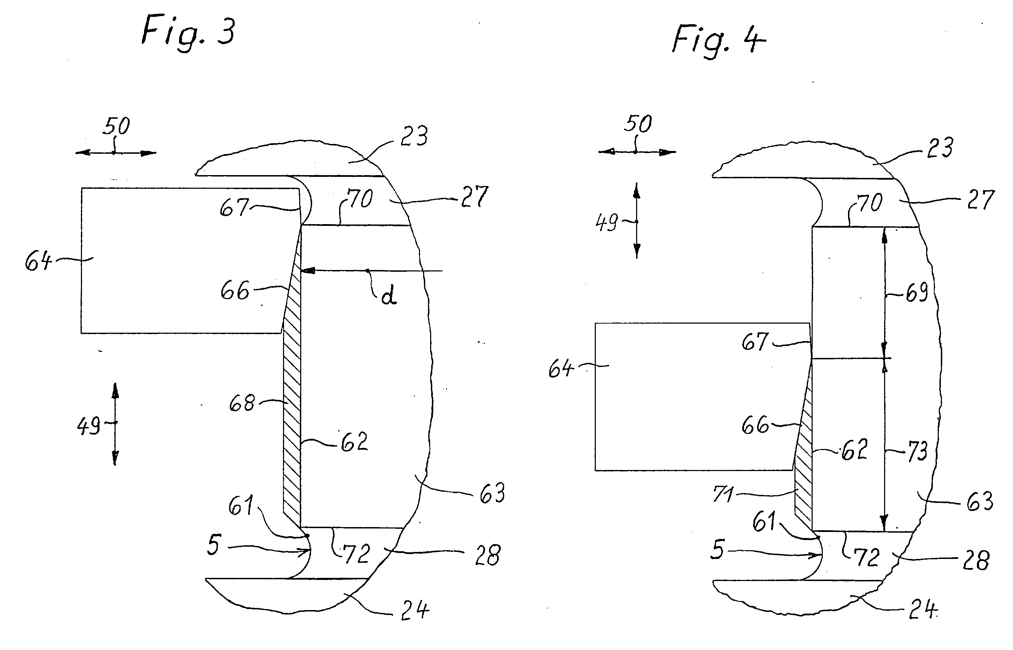

Die fertige Kontur des Pleuellagerzapfens 5, die in den Fig. 3 und 4 mit 61 bezeichnet ist, schließt eine Mantellinie 62 einer zylindrischen Fäche 63 ein.

Zur Schlichtbearbeitung der zylindrischen Fläche 63 des Pleuellagerzapfens 5 werden zwei Werkzeugeinheiten 29, 30 benutzt, die jeweils eine Links- und eine Rechtsausführung darstellen.

Die Werkzeugeinheit 29 in Linksausführung hat einen linken (64), die Werkzeugeinheit 30 in Rechtsausführung einen rechten Schlicht-Schneideinsatz 65.

Beide Schlicht-Schneideinsätze 64, 65 weisen eine Schneidengeometrie zum Längsschäldrehen auf.

Bei beiden Schlicht-Schneideinsätzen 64, 65 ist die Hauptschneide 66 in einem Winkel von 10° zu der Drehachse 8 der Drehmaschine 1 angeordnet.

Die Nebenschneide 67 eines jeden Schlicht-Schneideinsatzes 64, 65 hat einen Winkel von 2° zu der Drehachse 8 der Drehmaschine 1.

Zu Beginn der Schlichtbearbeitung des Pleuellagerzapfens 5 führt der linke Schlicht-Schneideinsatz 64 ein Einstechdrehen in Planvorschubrichtung (Doppelpfeil 50) bis zum Fertigdurchmesser d durch.

Dabei nimmt der linke Schlicht-Schneideinsatz 64 die Anfangsstellung für das Längsschäldrehen ein, wie sie die Fig. 3 mit dem Schnitt durch die noch zu zerspanende Schlichtbearbeitungszugabe 68 zeigt.

Danach führt der linke Schlicht-Schneideinsatz 64 in Längsvorschubrichtung (Doppelpfeil 49) ein Längsschäldrehen in einem rechten Bereich 69 durch, und zwar von einem Flächenende 70 der zylindrischen Fläche 63 aus bis zu der in Fig. 4 dargestellten Stellung.

Durch das Längsschäldrehen wird die Schlichtbearbeitungszugabe 68 bis zu der restlichen Schlichtbearbeitungszugabe 71 zerspant.

Die restliche Schlichtbearbeitungszugabe 71 wird zerspant von dem anderen Flächenende 72 der zylindrischen Fläche 63 aus, wobei der rechte Schlicht-Schneideinsatz 65 das Einstech- und Längsschäldrehen in dem linken Bereich 73 analog zu der Arbeitsweise des linken Schlicht-Schneideinsatzes 64 ausführt.

### Bezugszeichenliste

- 1: Drehmaschine
- 2: Spannfutter
- 3: Kurbelwelle
- 4: Hauptlagerzapfen
- 5: Pleuellagerzapfen
- 6: Achse
- 7: Pfeil
- 8: Drehachse
- 9: Kurbelwellenachse
- 10: Werkzeug
- 11: Zentrierkörper
- 12: Tragkörper
- 13: Werkzeugeinheit
- 14: Werkzeugeinheit
- 15: Werkzeugeinheit
- 16: Werkzeugeinheit
- 17: Werkzeugeinheit
- 18: Werkzeugeinheit
- 19: Werkzeugeinheit
- 20: Werkzeugeinheit
- 21: Wangenvorsprung
- 22: Wangenvorsprung
- 23: Wangenvorsprung
- 24: Wangenvorsprung
- 25: Freistich
- 26: Freistich
- 27: Freistich
- 28: Freistich
- 29: Werkzeugeinheit
- 30: Werkzeugeinheit
- 31: Schraube
- 32: Mantelfläche
- 33: Lücke
- 34: Lücke
- 35: Abschnitt
- 36: Bereich
- 37: Bereich
- 38: Ausnehmung
- 39: Ausnehmung
- 40: Breite
- 41: Schraube
- 42: Spannvorrichtung
- 43: Nut-Feder-Anordnung
- 44: Werkzeugspindel
- 45: Spannstange
- 46: Spannklaue
- 47: Spannbolzen
- 48: Schwenkachse
- 49: Längsvorschubrichtung
- 50: Planvorschubrichtung
- 51: Absatz
- 52: Ringansatz
- 53: Schrupp-Schneideinsatz
- 54: Schrupp-Schneideinsatz
- 55: Schrupp-Schneideinsatz
- 56: Schrupp-Schneideinsatz
- 57: Schrupp-Schneideinsatz
- 58: Schrupp-Schneideinsatz
- 59: Schlicht-Schneideinsatz
- 60: Schlicht-Schneideinsatz
- 61: Kontur
- 62: Mantellinie
- 63: Fläche
- 64: Schlicht-Schneideinsatz
- 65: Schlicht-Schneideinsatz
- 66: Hauptschneide
- 67: Nebenschneide
- 68: Schlichtbearbeitungszugabe
- 69: Bereich
- 70: Flächenende
- 71: Schlichtbearbeitungszugabe
- 72: Flächenende
- 73: Bereich
- d: Fertigdurchmesser

## Patentansprüche

1. Verfahren zur Drehbearbeitung von Rotationsflächen an Werkstücken, vorzugsweise an Kurbelwellen, bei dem das Werkstück während der Drehbearbeitung rotiert und mit einem scheibenförmigen Werkzeug, das am Umfang mit versetzt angeordneten Schrupp- und Schlicht-Schneideinsätzen versehen ist, bearbeitet wird, wobei zur Schlichtbearbeitung einer jeden zylindrischen Fläche des Werkstückes mehrere Schlicht-Schneideinsätze eingesetzt werden, die zeitlich nacheinander in in Achsrichtung des Werkstückes aufgeteilten Bereichen Material vom Werkstück abtragen, dadurch gekennzeichnet, daß zur Schlichtbearbeitung einer jeden zylindrischen Fläche (63) des Werkstückes (3) von ihren beiden Flächenenden (70, 72) aus ein Längsschäldrehen durchgeführt wird.

2. Scheibenförmiges Werkzeug zur Durchführung des Verfahrens, das am Umfang mit versetzt angeordneten Schrupp- und Schlicht-Schneideinheiten versehen ist, dadurch gekennzeichnet, daß es zur Schlichtbearbeitung einer jeden zylindrischen Fläche (63) des Werkstückes (3) mindestens einen linken (64) und mindestens einen rechten Schlicht-Schneideinsatz (65) mit einer zum Längsschäldrehen ausgelegten Schneidengeometrie aufweist.

3. Scheibenförmiges Werkzeug nach Anspruch 2, dadurch gekennzeichnet, daß jeder Schrupp- (53, 54, 55, 56, 57, 58) und Schlicht-Schneideinsatz (59, 60, 64, 65) Bestandteil einer Werkzeugeinheit (13, 14, 15, 16, 17, 18, 19, 20, 29, 30) ist.
